# EUROPEAN PATENT SPECIFICATION

(11) **EP 1 287 099 B1**
(45) Date of publication and mention of the grant of the patent: **04.10.2006**
(21) Application number: 01934133.8
(22) Date of filing: 22.05.2001
(51) Int. Cl.: C11D 3/20, C11D 3/43, C11D 17/00, C09D 9/00, C09D 9/04, C23G 5/032

(54) **CLEANING SURFACES**
REINIGEN VON OBERFLÄCHEN
NETTOYAGE DE SURFACES

(30) Priority: 24.05.2000 GB 0012491; 31.05.2000 US 207963 P
(43) Date of publication of application: 05.03.2003
(73) Proprietor: IMPERIAL CHEMICAL INDUSTRIES PLC, London W1U 3AN (GB)
(72) Inventor: MOTSON, Harold, Russell, Cleveland TS20 1PP (GB)
(74) Representative: Roberts, Jonathan Winstanley
(86) International application number: PCT/GB2001/002263
(87) International publication number: WO 2001/090291

(56) References cited:
- WO-A-99/00025
- GB-A- 1 278 357
- US-A- 4 956 115
- US-A- 5 612 303
- US-A- 5 719 114
- DATABASE WPI Section Ch, Week 199719 Derwent Publications Ltd., London, GB; Class D25, AN 1997-209673 XP002174686 & JP 09 059677 A (TOA GOSEI CHEM IND LTD), 4 March 1997 (1997-03-04)
- DATABASE WPI Section Ch, Week 199119 Derwent Publications Ltd., London, GB; Class D25, AN 1991-137001 XP002174687 & JP 03 074495 A (LION CORP), 29 March 1991 (1991-03-29)

## Description

This invention relates to the cleaning of surfaces, in particular, to methods of domestic, institutional and industrial cleaning of hard surfaces, and to cleaning compositions.

In cleaning of hard surfaces, particularly those of metals, ceramics, glass and plastics, the cleaning processes typically involve treating the substrate to be cleaned with a cleaning fluid which aids physical or chemical dissolution or dispersion of soil on the surface being cleaned. The cleaning process, particularly in the domestic environment may include mechanical action as rubbing or scrubbing. However, in institutional cleaning it is desirable for economic reasons to reduce mechanical rubbing or scrubbing and in industrial cleaning it is generally desirable to avoid it. If possible, because it is difficult to use uniformly and is expensive. Particularly in industrial cleaning, energy to assist cleaning may be supplied by agitation or using ultrasound.

In all these types of cleaning, solvents are frequently used to improve soll removal by dissolving soll material, particularly oily, greasy or fatty solid, from the surface and/or top soften soils that are In the form of a coherent coating e.g. paint that is desired to be removed (stripped) from a painted substrate or for the removal of graffiti. Alkali materials can be Included e.g. moderately strong alkali such as soda ash (sodium carbonate) as a buffer and/or builder, or strong alkali such as caustic soda (sodium hydroxide) which can improve the removal fatty, waxy or oily solls particularly by hydrolysis of ester fats and oils. Surfactant, usually synthetic surfactant, materials are also commonly included to improve wetting of and to ald keeping detached contaminants suspended away from the substrate surface being cleaned. Compositions or this general type are known as cleaners and particularly as so-called "hard surface cleaners".

This invention is based on our discovery that certain aromatic acid esters are useful solvents for use in cleaning methods and inclusion in cleaning compositions. The invention includes methods of hard surface cleaning, for domestic, institutional and industrial applications, decreasing, particularly metal degreasing, vehicle cleaning and paint removal including paint stripping and graffiti removal and cleaning compositions suitable for un in such methods.

The present invention accordingly provides a method of cleaning a substrate, which includes contacting the substrate to be cleaned with an aqueous emulsion or microemulsion composition including at least one compound of the formula (I):

Ph-COO-R1 (I)

where
- R¹: is a C₆ to C₂₀ alkyl or alkenyl group,
and
- Ph: is a phenyl group.

In this method, typically the substrate will be contacted with a surfactant, usually a detergent surfactant, together with the compound of the formula (I). The surfactant containing composition is an aqueous composition, usually in the from of an oil in water emulsion, where the oil disperse phase is of includes a compound of the formula (I). The invention accordingly further provides a method of cleaning a substrate which includes contacting the substrate to be cleaned in which an aqueous cleaning composition, particularly in the form of an oil in water emulsion, which includes a compound of the formula (I) together with a surfactant, particularly a detergent surfactant.

The invention further includes:
a method of degreasing a substrate, particularly a metal substrate in which the substrate be degreased is contacted with an aqueous emulsion or microemulsion composition including at least one compound of the formula (I);
a method of hard surface cleaning in which a substrate to be cleaned is contacted with an aqueous emulsion or microemulsion composition including at least one compound of the formula (I) together with a surfactant, particularly a detergent surfactant, and a builder or alkalt;
a method of cleaning graffiti from a surface in which the surface to be cleaned is contacted with an aqueous emulsion or microemulsion composition including at least one compound of the formula (I) together with a surfactant, particularly a detergent surfactant, and optionally a builder and/or alkali;
a method of stripping paint from a substrate in which a painted substrate is contacted with an aqueous emulsion or microemulsion composition including at least one compound of the formula (I) together with a surfactant, particularly a detergent surfactant a method of rig cleaning in which the surface of the rig to be cleaned is contacted with an aqueous emulsion or microemulsion composition, especially a microemulsion formulation, including at least one compound of the formula (I) together with a surfactant, particularly a detergent surfactant; and
the use of compounds of the formula (I), as defined above, in cleaning surfaces, particularly in hard surface cleaning.

In compounds of the formula (I) the group R¹ is a is a C₆ to C₂₀ alkyl or alkenyl group particularly a C₈ to C₁₈ alkyl or alkenyl group which may be straight chain e.g. as in mixed esters such as (mixed C₁₂/C₁₃ alkyl) benzoate, or branched e.g. as in 2-ethylhexyl or *iso*-nonyl or branched chain C₁₈ alkyl as in so-called *iso*-stearyl (actually a mixture of mainly branched C₁₄ to C₂₂ alkyl with an average chain length close to C₁₈). Unsaturated longer chain groups include oleyl. Where longer chain length groups are used, particularly longer than C₁₂. It is desirable that are or include branching and/or unsaturation and/or that mixtures of such esters are used, as these tend to be more liquid than straight chain saturated esters.

The compound(s) of the formula (I) can be used in admixture with other organic solvent materials including those known for use in cleaning formulations. These materials include hydrocarbons particularly C₅ to C₁₈ hydrocarbons particularly paraffins e.g. minerals spirits and mineral oil hydrocarbon paraffin fractions, or terpeneold hydrocarbons such as d-limonene; halogenated, particularly chlorinated and/ore fluorinated, hydrocarbons, particularly C₁ to C₁₄ compounds, alcohols, particularly C₂ to C₈ alkanols such as, ethanol, *iso*-propanol and *iso-*hexanol; glycols such as monoethylene glycol and monopropylene glycol; glycol others such as butyl ethoxol and butyl diglycol. Generally, particularly because the compounds of the formula (I) have good environmental profiles, known solvents having poor environmental profiles e.g. chlorinated hydrocarbons and volatile hydrocarbons will not be used, but solvents known to have low adverse environmental impact e.g. terpenes such as d-limonene may readily be included in cleaning compositions used in the invention.

When mixtures are used, compounds of the formula (I) will typically be present in at least 10%, usually at least 25%, mom usually at least 40%, desirably at least 50%, by weight of the total solvent used. When present, other solvent components will desirably be used at level typically of from 1 to 90, usually 1 to 75%, more desirably 2 to 60, and particularly 5 to 50% by weight of the total carrier fluid used.

For convenience, the compound(s) of the formula (I), or mixtures including them, used in cleaning methods and included in cleaning formulations according to the invention are for brevity sometimes referred to simply as solvents or solvent component of cleaning formulations. The particular formulation and form of composition used in various embodiments of the invention vary depending on the particular cleaning duty involved. The cleaning formulations used in this invention include water and are generally water based. The compounds of the formula (I) are generally not miscible with water so forms of cleaning composition include emulsions of the solvent in an aqueous phase, invert emulsions of an aqueous phase in the solvent, or microemulsions where the disperse phase particles are so fine, typically smaller than about 100 nm, that they do not greatly scatter visible light.

The formulations used in this invention will fall into one of two general types: emulsions and microemulsions. Microemulsion formulations can be formulated at use concentrations or as concentrates which are diluted before use, whereas emulsions are generally formulated at use concentrations. Overall, such formulations will have compositions as indicated below (figures are percentages by weight):

| Component | Concentrates | |
|---|---|---|
| | Typical | Desirable |
| surfactant* | 1 to 15 | 5 to 10 |
| solvent | 10 to 60 | 20 to 40 |
| of formula (I) | 10 to 60 | 10 to 40 |
| other (when used) | 5 to 50 | 5 to 30 |
| water (to 100) | to 100 | 55 to 75 |

The surfactant will usually be present as an emulsifier and possibly also as detergent, and will usually be a combination of two or more emulsifiers e.g. low HLB and high HLB emulsifiers. Emulsion formulations are formulated for direct use.

### Microemulsion formulations:

| Component | Concentrates | |
|---|---|---|
| | Typical | Desirable |
| surfactant* | 10 to 25 | 12 to 20 |
| co-emulsifier (when used) | 1 to 10 | 2 to 8 |
| solvent | 20 to 50 | 25 to 40 |
| of formula (I) | 20 to 50 | 25 to 40 |
| other (when used) | 5 to 30 | 10 to 20 |
| water | to 100 | |

The surfactant will usually be present as an emulsifier and possibly also as a detergent, and will usually be a combination of two or more emulsifiers e.g low HLB and high HLB emulsifiers. Microemulsion formulations can be formulated either for direct use or after dilution in water in the range typically from 1:1 to 1:10. On dilution the physical form of the formulation may change to en emulsion or similar form with a differentiated solvent phase.

In cleaning formulations used in the invention, the non-solvent components will generally be of types and used in amounts as described below.
Surfactants can be present to serve a range of functions. Thus:
Detergents can be included to aid soil removal from substrates to be cleaned. Examples include:
   anionic detergents such as ether sulphates (alcohol alkoxylate sulphate esters) such as sodium lauryl ether sulphate and ether phosphates e.g. those sold by Uniqema under the designation Atlas G2203 or Atlas G2207, alkyl and alkaryl sulphonates such as isopropyl amine dodecylbenzene sulfonate; alcohol sulphates, sulphosuccinate mono- and di-esters, ether carboxylates; and
   non-ionic detergents such as alkyl phenol ethoxylates, alcohol alkoxylates, particularly ethoxylates, including those sold by Uniqema under the designation "Synperonic", particularly grades such as A7, 91/2.5, 91/5 13/10, NCA 850, NCE 7 and LF/RA 30, and under the trade designation Brij 30, sorbitan fatty acid esters, ethoxylated sorbitan fatty acid esters such as sorbitan mono-oleate 20EO as sold by Uniqema under the designation Tween 20, sorbitol esters such as sorbitol hexaoleate, ethoxylated fatty acid esters, and alkylene oxide block copolymers.

Typical proportions of detergent are from 1 to 30%, more usually from 1 to 20%, and desirably from 1 to 10%, by weight of the cleaning formulation.

Emulsifiers for the solvent(s) will typically be non-ionic surfactants such as alcohol alkoxylates and ethoxylated sorbitan fatty acid esters, and in particular blends of low HLB (hydrophile lipophile balance) and high HLB emulsifiers. Typical proportions of emulsifiers are from 1 to 20%, more usually from 1 to 15%, and desirably from 1 to 10%, by weight of the cleaning formulation.

The functions of detergents and emulsifiers may overlap so the same material may provide both functions.

Wetters (wetting agents) can be included to aid wetting of the substrate. Examples include nonionic surfactants such as alcohol alkoxylates, particularly of relatively short chain e.g. C8 to C11, alcohols with relatively short polyalkylenoxy chains e.g. containing up to 6 alkylene oxide residues, and anionic surfactants such as sulphosuccinates. Typical proportions of wetters are from 1 to 10%, more usually 2 to 10%, and desirably 2 to 7%, by weight of the cleaning formulation.

Non surfactant materials that can be present include:
Hydrotropes can be includes to maintain solubility of the surfactant materials, particularly non-ionic surfactants. Anionic surfactants such as sulphonates and phosphate esters, cationic surfactants such as quaternary ammonium compounds and nonionic surfactants such as alkyl polysaccharides. Typical concentrations for hydrotropes are from 1 to 25%, more usually from 1 % to 15% ,and desirably from 1 % to 10%, by weight of the cleaning formulation.
Builder materials can be included to enhance the effectiveness of the surfactants used, Examples include phosphates, orthophosphates, polyphosphates such as tetrapotassium pyrophosphate, silicates and/or metasilicates such as sodium metasilicate, and organic builders such as hydroxycarboxylic acids and their water soluble, particularly alkali metal e.g. Na or K, salts, such as citrates e.g. sodium citrate and gluconates, phosphonic acids and phosphonoalkane carboxylic acids and their water soluble particularly alkali metal e.g. Na or K, salts. Typical proportions of builders are from 1 to 50%, more usually from 2 to 30%, and desirably from 5 to 20%, by weight of the cleaning formulation.
Sequestrants can be included to particularly to reduce the concentration of metal ions e.g. those of Ca and Mg or of heavy metals, in the cleaning environment. Suitable sequestrants can include N-carboxylated polyamine salts such as the alkali metal e.g. Na or K, salts of ethylene diamine tetra-acetic acid (EDTA), nitrilotriacetic acid (NTA), polycarboxylic acids, hydroxycarboxylic acids such as citric acid, polyacrylic acids, gluconic and heptanoic acids. Typical concentrations of sequestrants are from 1 to 30%, more usually from 1 to 20%, and desirably from 2 to 10%, by weight of the cleaning formulation.
Alkali such as sodium hydroxide or triethanolamine, can be included to maintain an alkaline environment to aid fat removal by saponification. Typical concentrations of are from 1 to 20%, more usually from 1 to 10%, and desirably from 2 to 7%, by weight of the cleaning formulation.
Acids such as phosphoric acid (usually as ca 85% by weight aqueous solution) can be included to facilitate the removal of, for example, calcareous deposits. Typical concentrations of acids are from 1 to 50%, more usually from 2 to 30%, and desirably from 5 to 20%, by weight of the cleaning formulation.
Solids such as mild abrasives can be included to aid mechanical removal of soil from substrates. Typical amounts of such solids are from 1 to 20% more usually from 0 (1) to 10%, and desirably from 1 to 5 %, by weight of the cleaning formulation.
Corrosion inhibitors can be included to reduce or prevent corrosion particularly on metal substrates such as iron and steels, including stainless, nickel and chrome steels, copper, brasses, bronzes, bronzes, aluminium, silumin and duralumin. Examples include straight or branched chain, particularly C8 to C11, alkanecarboxylic acids and their water soluble, e.g. alkali metal, such as Na or K, or ammonium such as alkanolammonium, salts. Typical concentrations of corrosion inhibitors are from 1 to 10%, more usually from 2 to 10%, and desirably from 2 to 7%, by weight of a concentrated cleaning formulation.
Anti foam agents are used, particularly in compositions for use in spray cleaning, and examples of anti foams include water soluble or dispersible organopolysiloxanes and nonionic surfactants such as alcohol ethoxylate propoxylates e.g. that sold by Uniqema under the designation Synperonic LF/RA 260. Typical concentrations of anti foams are from 0.01 to 10%, more usually from 0.1 to 5%, and desirably from 0.5 to 2%, by weight of the cleaning formulation.
Other materials that can be present in the cleaning compositions include stabilisers, preservatives, particularly biocides such as anti-microbials, perfume and dye, typically at conventional levels.

The conditions of cleaning will vary with the application. Thus, temperature can vary from ambient temperature, particularly for domestic use, to moderately elevated temperatures which may be used in industrial cleaning e.g. metal degreasing. Typically the temperature will be in the range 15 to 80°C. The pH of the cleaning medium can vary from moderately acid to strongly alkali e.g. 4 to 13.5, but more usually 9 to 13.5 (by the inclusion of alkaline e.g. Na or K. hydroxides or carbonates), and in particular used at moderately elevated temperatures eg. 40 to 80°C.

The cleaning technique can vary from manual application and rubbing to spraying and dipping as used in industrial cleaning. Particularly in industrial cleaning, energy may be provided by mechanical agitation or sonically e.g using ultrasound.

In domestic hard surface cleaning, the formulations are emulsions or microemulsions and are usually retailed at ready to use concentrations, and are typically applied to the substrate to be cleaned by spraying, scrubbing, wiping or brushing and cleaning will usually be augmented by mechanical rubbing or wiping.

For institutional and industrial cleaning applications the formulations are emulsions or microemulsions and are typically applied to the substrate to be cleaned by spraying, scrubbing, wiping, or by machines using such application actions.

In industrial cleaning in food related applications, such as in dairies, breweries and food processing plants, the formulations are usually applied by spraying, immersion, particularly by passing the cleaning medium through the equipment e.g. down a line or pipe to be cleaned, wiping and brushing.

For industrial degreasing, the formulation are emulsions or microemulsions and are usually applied by spraying, immersion, wiping and/or brushing. Degreasing it typically used in metal forming operations or in cleaning substrates which acquire oil or greases or similar contamination during industrial fabrication operations such as electronic circuit boards.

A related cleaning application is rig cleaning which is the cleaning of oilfield equipment e.g. at the head of an oil drilling or production well. For such applications the cleaner is usually provided as a microemulsion which is diluted with water before use. Reducing environmental damage is particularly important in marine oilfield operations and in such situations it is usual to use brine (seawater) as the dilution water.

In paint stripping and graffiti remove the proportion of solvent, including compound (s) of the formula (I) and where used other solvents, will generally be higher than for general cleaning applications. Typically, they can be similar to cleaners for removing tenacious oily soils. For these applications, the total proportion of solvent will usually be at least 10% and may be as high as 90% of the total cleaning material. Cleaners having, within this broad range, lower proportions of solvent will usually have relatively higher proportions of detergent surfactants and those with higher proportions of solvent can use lower concentrations of detergent. Thus, a water based paint stripper or graffiti remover may have (by weight) from 15 to 25% solvent and 25 to 30% of non-ionic detergents or a water based emulsion formulation may contain from 40 to 65% of solvent dispersed in an aqueous phase including 15 to 25% detergent. The solvent is desirably a mixture of compound(s) of the formula (I) with other solvents e.g. limonene and the detergents are desirably alcohol ethoxylate(s) and/or fatty add ethoxylates and may include a mix of low and high HLB detergents. The formulations may also contain, sequestrants e.g EDTA or NTA at from 5 to 10% by weight.

Examples of typical formulations include (the solvent being or including a compound of the formula (I) - percentages are by weight):

| Heavy Duty Hard Surface Cleaner | |
|---|---|
| sodium lauryl ether sulphate (27% active) | 13% |
| alcohol ethoxylate | 4% |
| solvent | 4% |
| tetrapotassium pyrophosphate | 5% |
| preservative, perfume and dye | as required |
| water | to 100% |

Used as is or in dilution in water for range of typical household substrates and soils.

| Metal Degreasing Formulations - used as is or in dilution. In water (typically 1:10) | | |
|---|---|---|
| 1 | solvent | 28% |
| | anionic sulphonate detergent | 13% |
| | ethoxylated sorbitan ester | 6% |
| | *Iso*-hexanol | 4% |
| | water | to 100% |
| 2 | Solvent | 15% |
| | low HLB alcohol ethoxylate | 14% |
| | high HLB alcohol ethoxylate | 6% |
| | quaternary ammonium hydrotrope | 2.5% |
| | ethanol | 4% |
| | tetrapotassium pyrophosphate | 2% |
| | EDTA Na4 | 1% |
| | water | to 100 |
| 3 | solvent | 33% |
| | surfactant blend* | 17% |
| | water | to 100% |

| | | |
|---|---|---|
| *-commercial blend of anionic nonionic and cationic surfactants | | |

| Heavy Duty Emulsion Cleaner | |
|---|---|
| solvent | 60% |
| ethoxylated fatty acid | 14% |
| alcohol ethoxylate | 6% |
| water | to 100 |

| Railway Wagon External Cleaner | |
|---|---|
| alcohol ethoxylate | 10% |
| phosphoric acid (85%) | 40% |
| alkyl phosphate ester | 15% |
| solvent | 5% |
| water | to 100% |

| Offset Printing Plate Cleaner | |
|---|---|
| solvent | 15 to 20% |
| low HLB alcohol ethoxylate | 12 to 14% |
| high HLB alcohol ethoxylate | 14 to 16% |
| NTA (38%) | 5 to 7% |
| butyl diglycol | 2 to 3% |
| Water | to 100 |

| Truck Wash Formulation | |
|---|---|
| sodium hydroxide | 2% |
| sodium metasilicate | 1 % |
| sodium gluconate | 2% |
| EDTA Na4 | 1% |
| low foam wetter* | 5% |
| solvent | 3% |
| AtsurfH1500 | 3% |
| water | to 100% |

| | |
|---|---|
| * - alcohol ethoxylate propoxylate | |

This truck wash formulation is typically used in aqueous dilution from 1:10 to 1:50 depending on the nature of the soil. The substrate is typically painted metal. Formulations can be applied by spraying at temperatures between ambient and 60°C.

| Screenwash Formulations | | |
|---|---|---|
| 1 | alcohol ethoxylate | 1% |
| | triethanolamine | 0.2 to 0.5% |
| | solvent | to 100 |
| 2 | alcohol ethoxylate | 2% |
| | triethanolamine | 0.2% |
| | tetrapotassium pyrophosphate | 2% |
| | glycerine | 2.5% |
| | *iso*-propanol | 42% |
| | solvent | 42% |
| | water | to 100% |

These are concentrates which typically used are diluted from 1:20 to 1:100 in water for use on car windscreens.

| Hand Cleanser | |
|---|---|
| solvent | 40% |
| nonionic/anionic surfactant blend | 12% |
| anionic surfactant | 0.5% |
| glycerine | 1% |
| mineral oil | 2% |
| water | to 100 |

This formulation is typically used as is to remove oil and grease from hands.

The following Examples illustrate the invention. All parts and percentages are by weight unless otherwise specified.

| **Materials** | |
|---|---|
| Sol1 | 2-ethylhexyl benzoate |
| CSol1 | D-Ilmonene |
| CSol2 | *N*-methyl pyrrolidone |
| CSol3 | benzyl alcohol |
| **Surf1** | a 1:1 mixture of Synperonic 91/2.6 and Synperonic 91/6 both ex Uniqema |
| **Surf2** | Monamulse DBE - a mixture of non-Ionic and anionic surfactants ex Uniqema |

### Test Methods

### Scrub-Testing

A white tile surface, cleaned with acetone and dried with a laboratory paper tissue, is coated with a test kitchen soil prepared by mixing: carbon black (7 g); gravy granules (95 g); lard (90 g); gelatine (12 g); and water (796 g) - total 1000 g and warming until homogenous. The soil is applied to the top edge of the tile as an even line of warm soil and spread over the tile surface using a warmed wire wound bar (No 6 k-bar); baked on the tile in a pre-heated oven at 70°C for 1 hour, and allow to cool to ambient temperature. The soil is coulometrically measured using a Gardner spectrophotometer (Delta E value) at a noted point of measurement (so that later measurements are at the same place); the soiled plate clipped onto the scrub tester platform and three drops of the test cleaning agent applied to the tile surface. The scrub tester is a mechanical arm with a sponge on the end which can reciprocally rub the test surface to simulate cleaning by scrubbing using a load on the sponge of 160 N.m⁻² and a stroke length of 12 cm. The tile is rubbed in groups of 5 rubs (1 rub = once forwards and back) and the colour of the test location is measured. The assessed cleaning efficiency is the difference between in the Delta E value of the scrubbed tile less that of the tile originally. Multiple runs may be used and average results quoted.

### Metal degreasing

Steel test coupons of uniform size and material are cleaned in acetone and dried in air. The clean coupons are weighed (in g to 0.1 mg) and coated with soil. The test soil is a mixture of: stearic acid (15 g); oleic acid (15 g); solid vegetable fat (30 g); lubricating oil (e.g. engine oil) (25 g); and octadecanol (stearyl alcohol) (8 g) - total 93 g. Each test coupon is dipped, up to a premade mark on the coupon, into the molten test soil at a known temperature for approximately 2 seconds allowed to cool in ambient air until the dirt solidifies after which the coupon is reweighed to determine the amount of soil on the coupon (ca 0.2 g).

The test cleaning solution, an aqueous cleaning mix containing 3% by weight solution of the test solvent arid 3% by weight Surf1, is placed in the Zeltex Vista Color tester apparatus and allowed to reach test temperature, usually 40 or 60°C. Each coupon is lowered into the test solution; moved up and down in a helicoidal motion for a set time (sufficient for realistic comparison between test solutions); removed from the test solution; allowed to dry in ambient air; and reweighed to determine the amount of soil removed. The assessed cleaning efficiency is the (weight) percentage of the soil initially present that is removed by the washing. Duplicate runs are carried out with mean results quoted.

### Paint Stripping

The surface of metal plates were sprayed with acetone to clean them and allowed to dry in air at ambient temperature. An even layer of test paint was applied to the metal plate using a 1 inch (ca 25 mm) brush, and left to dry for 7 days at ambient temperature.

2ml of test solvent was applied to the painted surface by pipette as a continuous line, of equal length for each test solvent. The effects were then observed at 30, 60, and 90 minutes (testing neat solvents) or 10, 20 and 30 minutes (for solvent mixtures). Observations and 'effect' were recorded using a ranking scale of paint stripping performance from 1 = poor (no stripping) to 5 = good (complete paint removal).

Note: acrylic paints required solvents wiping off (one wiping motion from top to bottom along solvent line, applying similar manual pressure for each test) with an industrial tissue after the test time in order to assess paint removal.

### Example 1

The ability of Sol1 to function as point removers for alkyd, acrylic and urethane paints was investigated. Using the method described above, tests were run using neat solvents Sol1 with CSol1 and CSol2 for comparison and with blends of Sol1 with CSol3 and Csol2 The results are set out in Table 4 below.

**Table 4**

| Ex No | Solvent | | co-solvent | | Paint type | | |
|---|---|---|---|---|---|---|---|
| | type | % | type | % | Alkyd Gloss | Acrylic | Urethane |
| C4.1 | Csol1 | 100 | - | - | 0 | 0 | 5 |
| 4.1 | Sol1 | 100 | - | - | 5 | 5 | 5 |
| C4.2 | Csol2 | 100 | - | - | 5 | 5 | 5 |
| 4.2 | Sol1 | 90 | CSol2 | 10 | 3 | 5 | 5 |
| C4.3 | CSol1 | 90 | CSol2 | 10 | 0 | 0 | 4 |
| 4.3 | Sol1 | 90 | CSol3 | 10 | 4 | 5 | 5 .. |
| C4.4 | CSol1 | 90 | CSol3 | 10 | 0 | 4 | 1 |
| 4.4 | Sol1 | 88 | CSol2 | 20 | 4 | 5 | 6 |
| 4.5 | Sol2 | 80 | CSol3 | 20 | 5 | 5 | 5 |
| C4.5 | CSol1 | 80 | CSol3 | 20 | 0 | 3 | 1 |

### Example 2

The ability of compounds described in formula 1 to remove used engine of as engine of as soil (substituted for the synthetic soil used in the standard method described above) with a treatment time of 1 minute. The results are set out in Table 5 below.

**Table 5**

| Ex No | Solvent | Temp (°C) | Efficiency (%) |
|---|---|---|---|
| 5.1 | Sol1 | 20 | 89.4 |
| 5.2 | Sol1 | 40 | 88.5 |

## Claims

1. A method of cleaning a substrate, which includes contacting the substrate to be cleaned with an aqueous emulsion or microemulsion composition, including at least one compound of the formula (I):
Ph - COO - R1 (I)
where
R¹ is a C₆ to C₂₀ alkyl or alkenyl group; and
Ph is a phenyl group.

2. A method as claimed in claim 1 wherein R¹ is a C₆ to C₁₀ alkyl group.

3. A method as claimed in either claim 1 or claim 2, wherein R¹ is a C₈ to C₁₀ branched alkyl group.

4. A method as claimed in any one of claims 1 to 3 wherein the compound of the formula (I) is or includes 2-ethylhexyl benzoate.

5. A method as claimed in any one of claims 1 to 4 for degreasing a substrate, particularly a metal substrate, by contacting the substrate with a composition, particularly an aqueous composition, including at least one compound of the formula (I).

6. A method as claimed in any one of claims 1 to 4 for hard surface cleaning, by contacting a hard surface to be cleaned is contacted with a composition, particularly an aqueous composition, including at least one compound of the formula (I) together with a surfactant, particularly a detergent surfactant, and a builder or alkali.

7. A method as claimed in any one of claims 1 to 4 for deaning graffiti from a surface in which the surface to be cleaned is contacted with a composition, particularly an aqueous composition, including at least one compound of the formula (I) together with a surfactant.

8. A method as claimed in any one of claims 1 to 4 for stripping paint from a substrate in which a painted substrate is contacted with a composition, particularly an aqueous composition, including at least one compound of the formula (I) together with a surfactant, particularly a detergent surfactant.

9. A method as claimed in any one of claims 1 to 4 for rig cleaning in which the surface of the rig to be cleaned is contacted with an aqueous microemulsion composition including at least one compound of the formula (I) together with a surfactant, particularly a detergent surfactant.

## Patentansprüche

1. Verfahren zur Reinigung eines Substrats, welches einschließt, dass das zu reinigende Substrat mit einer wässrigen Emulsions- oder Mikroemulsionszusammensetzung in Kontakt gebracht wird, die wenigstens eine Verbindung der Formel (I) einschließt:
Ph-COO-R1 (I)
wobei R¹ eine C₆- bis C₂₀-Akyl- oder Alkenylgruppe und
Ph eine Phenylgruppe ist.

2. Verfahren nach Anspruch 1, wobei R¹ eine C₆- bis C₁₀₋Akylgruppe ist.

3. Verfahren nach Anspruch 1 oder 2, wobei R¹ eine verzweigte C₈- bis C₁₀-Akylgruppe ist.

4. Verfahren nach einem der Ansprüche 1 bis 3, wobei die Verbindung der Formel (I) 2-Ethylhexylbenzoat ist oder einschließt.

5. Verfahren nach einem der Ansprüche 1 bis 4 zum Entfetten eines Substrats, insbesondere eines Metallsubstrats, indem das Substrat mit einer Zusammensetzung, insbesondere einer wässrigen Zusammensetzung, in Kontakt gebracht wird, die wenigstens eine Verbindung der Formel (I) einschließt.

6. Verfahren nach einem der Ansprüche 1 bis 4 zum Reinigen einer harten Oberfläche, indem die zu reinigende harte Oberfläche mit einer Zusammensetzung, insbesondere einer wässrigen Zusammensetzung, in Kontakt gebracht wird, die wenigstens eine Verbindung der Formel (I) zusammen mit einem oberflächenaktiven Mittel, insbesondere einem oberflächenaktiven Detergens, und einen Aufbaustoff oder eine Lauge einschließt.

7. Verfahren nach einem der Ansprüche 1 bis 4 zum Beseitigen eines Graffiti von einer Oberfläche, bei dem die zu reinigende Oberfläche mit einer Zusammensetzung, insbesondere einer wässrigen Zusammensetzung, in Kontakt gebracht wird, die wenigstens eine Verbindung der Formel (I) zusammen mit einem oberflächenaktiven Mittel einschließt.

8. Verfahren nach einem der Ansprüche 1 bis 4 zum Ablösen eines Anstrichs von einem Substrat, bei dem das angestrichene Substrat mit einer Zusammensetzung, insbesondere einer wässrigen Zusammensetzung, in Kontakt gebracht wird, die wenigstens eine Verbindung der Formel (I) zusammen mit einem oberflächenaktiven Mittel, insbesondere einem oberflächenaktiven Detergens, einschließt.

9. Verfahren nach einem der Ansprüche 1 bis 4 zum Reinigen einer Ausrüstung, bei dem die Oberfläche der zu reinigenden Ausrüstung mit einer wässrigen Mikroemulsionszusammensetzung in Kontakt gebracht wird, die wenigstens eine Verbindung der Formel (I) zusammen mit einem oberflächenaktiven Mittel, insbesondere einem oberflächenaktiven Detergens, einschließt.

## Revendications

1. Procédé pour nettoyer un substrat, qui comprend la mise en contact du substrat à nettoyer avec une émulsion aqueuse ou une composition de microémulsion, incluant au moins un composé de formule (I) :
Ph - COO - R1 (I)
où
R¹ est un groupe alkyle en C₆ à C₂₀ ou alcényle ; et
Ph est un groupe phényle.

2. Procédé selon la revendication 1, dans lequel R¹ est un groupe alkyle en C₆ à C₁₀.

3. Procédé selon la revendication 1 ou la revendication 2, dans lequel R¹ est un groupe alkyle ramifié en C₈ à C₁₀.

4. Procédé selon l'une quelconque des revendications 1 à 3, dans lequel le composé de formule (I) est ou inclut du benzoate de 2-éthylhexyle.

5. Procédé selon l'une quelconque des revendications 1 à 4 pour dégraisser un substrat, en particulier un substrat métallique, par la mise en contact du substrat avec une composition, en particulier une composition aqueuse, incluant au moins un composé de formule (I).

6. Procédé selon l'une quelconque des revendications 1 à 4 pour nettoyer une surface dure, par la mise en contact d'une surface dure à nettoyer avec une composition, en particulier une composition aqueuse, incluant au moins un composé de formule (I) associé à un tensioactif, en particulier un tensioactif détergent, et un adjuvant ou un alcali.

7. Procédé selon l'une quelconque des revendications 1 à 4 pour nettoyer des graffitis à partir d'une surface, dans lequel la surface à nettoyer est mise en contact avec une composition, en particulier une composition aqueuse, incluant au moins un composé de formule (I) associé à un tensioactif.

8. Procédé selon l'une quelconque des revendications 1 à 4 pour décaper la peinture à partir d'un substrat, dans lequel un substrat peint est mis en contact avec une composition, en particulier une composition aqueuse, incluant au moins un composé de formule (I) associé à un tensioactif, en particulier un tensioactif détergent.

9. Procédé selon l'une quelconque des revendications 1 à 4 pour nettoyer une plateforme, dans lequel la surface de la plateforme à nettoyer est mise en contact avec une composition aqueuse de microémulsion, incluant au moins un composé de formule (I) associé à un tensioactif, en particulier un tensioactif détergent.
